# EUROPEAN PATENT APPLICATION

(11) **EP 4 597 923 A1**
(43) Date of publication of application: **06.08.2025**
(21) Application number: 22959967.5
(22) Date of filing: 28.09.2022
(51) Int. Cl.: H04L 9/22, H04W 16/28, H04W 4/30

(54) **COMMUNICATION METHOD, AND DEVICE**

(71) Applicant: GUANGDONG OPPO MOBILE TELECOMMUNICATIONS CORP., LTD., Dongguan, Guangdong 523860 (CN)
(72) Inventor: LIU, Yang, Dongguan, Guangdong 523860 (CN); YU, Xinlei, Dongguan, Guangdong 523860 (CN)
(74) Representative: Mewburn Ellis LLP
(86) International application number: PCT/CN2022/122311
(87) International publication number: WO 2024/065324

(57) **Abstract**

The present disclosure relates to a communication method, a device, a computer-readable storage medium, a computer program product and a computer program. The method includes: transmitting, by a first device, request information, where the request information is used to request processing of a sensing signal.

## Description

### TECHNICAL FIELD

The present disclosure relates to the field of communications, and more specifically, to a communication method, a device, a computer-readable storage medium, a computer program product, and a computer program.

### BACKGROUND

In the related art, a wireless electromagnetic wave signal (referred to as a radio signal, for short) used in a cellular network is mainly used for wireless data transmission. However, the radio signal in the cellular network also has an ability to sense an environment, so the radio signal may also be considered for sensing. However, in a scenario where the radio signal is used for sensing, how to avoid privacy leakage of a sensed device to ensure its own security has become a problem that needs to be solved.

### SUMMARY

Embodiments of the present disclosure provide a communication method, a device, a computer-readable storage medium, a computer program product, and a computer program

The embodiments of the present disclosure provide a communication method, and the method includes:
transmitting, by a first device, request information, where the request information is used to request processing of a sensing signal.

The embodiments of the present disclosure provide a communication method, and the method includes:
processing, by a second device, a sensing signal in a process of transmitting the sensing signal.

The embodiments of the present disclosure provide a communication method, and the method includes:
receiving, by a core network device, request information; where the request information is used to request processing of a sensing signal; and
transmitting, by the core network device, indication information, where the indication information is used to indicate processing on the sensing signal.

The embodiments of the present disclosure provide a first device, and the first device includes:
a first communication unit, configured to transmit request information; where the request information is used to request processing of a sensing signal.

The embodiments of the present disclosure provide a second device, and the second device includes:
a second communication unit, configured to transmit a sensing signal; and
a second processing unit, configured to process the sensing signal in a process of the second communication unit transmitting the sensing signal.

The embodiments of the present disclosure provide a core network device, and the core network device includes:
a third communication unit, configured to: receive request information, the request information being used to request processing of a sensing signal; and transmit indication information, the indication information being used to indicate processing on the sensing signal.

The embodiments of the present disclosure provide a first device, and the first device includes a processor and a memory. The memory is used to store a computer program, and the processor is used to invoke and execute the computer program stored in the memory, to cause the first device to perform the method mentioned above.

The embodiments of the present disclosure provide a second device, and the second device includes a processor and a memory. The memory is used to store a computer program, and the processor is used to invoke and execute the computer program stored in the memory, to cause the second device to perform the method mentioned above.

The embodiments of the present disclosure provide a core network device, and the core network device includes a processor and a memory. The memory is used to store a computer program, and the processor is used to invoke and execute the computer program stored in the memory, to cause the core network device to perform the method mentioned above.

The embodiments of the present disclosure provide a chip for implementing the method mentioned above.

Specifically, the chip includes: a processor configured to invoke a computer program from a memory and execute the computer program, to cause a device equipped with the chip to perform the method mentioned above.

The embodiments of the present disclosure provide a computer-readable storage medium for storing a computer program. The computer program, when executed by a device, causes the device to perform the method mentioned above.

The embodiments of the present disclosure provide a computer program product including computer program instructions, and the computer program instructions cause a computer to perform the method mentioned above.

The embodiments of the present disclosure provide a computer program, and the computer program, when executed on a computer, causes the computer to perform the method mentioned above.

In the embodiments of the present disclosure, a first device may transmit request information for requesting to process a sensing signal, so that a network side may perform corresponding processing on the sensing signal, which can avoid a privacy leakage of the first device and ensure information security of the first device.

### BRIEF DESCRIPTION OF THE DRAWINGS

FIG. 1 is a schematic diagram of an application scenario according to the embodiments of the present disclosure.
FIG. 2 is a diagram of a 5G network system architecture according to the embodiments of the present disclosure.
FIG. 3 is an exemplary flowchart of a sensing operation.
FIG. 4 is a schematic flowchart of a communication method according to an embodiment of the present disclosure.
FIG. 5 is a schematic flowchart of a communication method according to another embodiment of the present disclosure.
FIG. 6 is a schematic flowchart of a communication method according to yet another embodiment of the present disclosure.
FIG. 7 is an exemplary flowchart of a communication method according to the present disclosure.
FIG. 8 is another exemplary flowchart of a communication method according to the present disclosure.
FIG. 9 is a schematic block diagram of a first device according to an embodiment of the present disclosure.
FIG. 10 is a schematic block diagram of a first device according to another embodiment of the present disclosure.
FIG. 11 is a schematic block diagram of a second device according to an embodiment of the present disclosure.
FIG. 12 is a schematic block diagram of a core network device according to an embodiment of the present disclosure.
FIG. 13 is a schematic block diagram of a communication device according to the embodiments of the present disclosure.
FIG. 14 is a schematic block diagram of a chip according to the embodiments of the present disclosure.
FIG. 15 is a schematic block diagram of a communication system according to the embodiments of the present disclosure.

### DETAILED DESCRIPTION

The technical solutions in the embodiments of the present disclosure will be described below in combination with the drawings in the embodiments of the present disclosure.

The technical solutions of the embodiments of the present disclosure may be applied to various communication systems, such as: a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of an NR system, an LTE-based access to unlicensed spectrum (LTE-U) system, an NR-based access to unlicensed spectrum (NR-U) system, a Non-Terrestrial communication Network (Non-Terrestrial Networks, NTN) system, a Universal Mobile Telecommunication System (UMTS), a Wireless Local Area Network (WLAN), a Wireless Fidelity (WiFi), a fifth-generation communication (5th-Generation, 5G) system, or other communication systems, etc.

Generally speaking, a number of connections supported by a traditional communication system is limited and is easy to implement, however, with the development of the communication technology, the mobile communication system will not only support the traditional communication, but also support, for example, Device to Device (D2D) communication, Machine to Machine (M2M) communication, Machine Type Communication (MTC), Vehicle to Vehicle (V2V) communication, or Vehicle to everything (V2X) communication, etc, and the embodiments of the present disclosure may also be applied to these communication systems.

In a possible implementation, the communication system in the embodiments of the present disclosure may be applied to a carrier aggregation (CA) scenario, may also be applied to a dual connectivity (DC) scenario, and may also be applied to a standalone (SA) network deployment scenario.

In a possible implementation, the communication system in the embodiments of the present disclosure may be applied to an unlicensed spectrum, where the unlicensed spectrum may also be considered as a shared spectrum, or the communication system in the embodiments of the present disclosure may also be applied to a licensed spectrum, where the licensed spectrum may also be considered as an unshared spectrum.

The embodiments of the present disclosure describe various embodiments in conjunction with a network device and a terminal device, where the terminal device may also be referred to as a user equipment (UE), an access terminal, a user unit, a user station, a mobile station, a mobile platform, a remote station, a remote terminal, a mobile device, a user terminal, a terminal, a wireless communication device, a user agent or a user apparatus, etc.

The terminal device may be a station (STATION, STA) in the WLAN, may be a cellular phone, a cordless phone, a Session Initiation Protocol (SIP) phone, a Wireless Local Loop (WLL) station, or a personal digital assistant (PDA) device, a handheld device with a wireless communication function, a computing device or other processing devices connected to a wireless modem, a vehicle-mounted device, a wearable device, a terminal device in a next generation communication system such as in an NR network, or a terminal device in a Public Land Mobile Network (PLMN) network evolved in the future, etc.

In the embodiments of the present disclosure, the terminal device may be deployed on land, which includes indoor or outdoor, in handheld, worn or vehicle-mounted; may also be deployed on water (e.g., on a ship, etc.); may also be deployed in the air (e.g., on an airplane, a balloon, a satellite, etc.).

In the embodiments of the present disclosure, the terminal device may be a mobile phone, a pad, a computer with a wireless transceiving function, a Virtual Reality (VR) terminal device, an Augmented Reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, etc.

As an example but not a limitation, in the embodiments of the present disclosure, the terminal device may also be a wearable device. The wearable device, which is also referred to as a wearable smart device, is a generic term for a device that can be worn, into which the daily wear is intelligently designed and developed by applying wearable technologies, such as glasses, gloves, watches, clothing, and shoes, etc. The wearable device is a portable device that is worn directly on the body, or integrated into the user's clothing or accessories. The wearable device is not just a hardware device, but also achieves powerful functions through software supporting, data interaction, and cloud interaction. A generalized wearable smart device includes for example, a smartwatch or smart glasses, etc., with full functions, large size, and entire or partial functions without relying on a smartphone, as well as, for example, a smart bracelet and smart jewelry for physical sign monitoring, which only focuses on a certain type of application function and needs to be used in conjunction with other devices such as a smartphone.

In the embodiments of the disclosure, the network device may be a device used for communicating with a mobile device. The network device may be an Access Point (AP) in the WLAN, a base station (Base Transceiver Station, BTS) in the GSM or CDMA, may also be a base station (NodeB, NB) in the WCDMA, or may also be an evolutionary base station (Evolutionary Node B, eNB or eNodeB) in the LTE, or a relay station or an access point, or a vehicle-mounted device, a wearable device, and a network device (gNB) in an NR network, or a network device in the PLMN network evolved in the future or a network device in the NTN network, etc.

As an example but not a limitation, in the embodiments of the present disclosure, the network device may have a mobile characteristic, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station provided on land, water, and other places.

In the embodiments of the present disclosure, the network device may provide a service for a cell, and the terminal device communicates with the network device through a transmission resource (such as a frequency domain resource, or a frequency spectrum resource) used by the cell. The cell may be a cell corresponding to the network device (such as the base station), the cell may belong to a macro base station or may also belong to a base station corresponding to a small cell, and the small cell here may include: a metro cell, a micro cell, a pico cell, a femto cell, etc, these small cells have characteristics of small coverage range and low transmission power, which are applicable for providing a data transmission service with high speed.

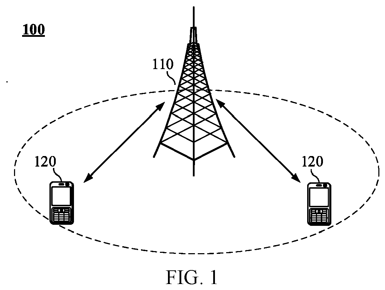

FIG. 1 exemplarily shows a communication system 100. The communication system includes one network device 110 and two terminal devices 120. In a possible implementation, the communication system 100 may include multiple network devices 110, and other numbers of terminal devices 120 may be included within a coverage range of each network device 110, which is not limited by the embodiments of the present disclosure.

In a possible implementation, the communication system 100 may also include other network entities such as a mobility management entity (MME), and an access and mobility management function (AMF), etc., which is not limited by the embodiments of the present disclosure.

Herein, the network device may also include an access network device and a core network device. That is, the wireless communication system also includes multiple core networks for communicating with the access network device. The access network device may be an evolutional base station (evolutional node B, referred to as eNB or e-NodeB for short), a macro base station, a micro base station (also referred to as a "small base station"), a pico base station, an access point (AP), a transmission point (TP) or a new generation base station (new generation Node B, gNodeB), etc., in a long-term evolution (LTE) system, a next-generation (mobile communication system) (next radio, NR) system or an authorized auxiliary access long-term evolution (LAA-LTE) system.

It should be understood that in the embodiments of the present disclosure, a device with a communication function in the network/system may be referred to as a communication device. Taking the communication system shown in FIG. 1 as an example, the communication device may include a network device and a terminal device with the communication function. The network device and the terminal device may be specific devices in the embodiments of the present disclosure, which will not be repeated herein. The communication device may also include other devices in the communication system, such as a network controller, a mobility management entity, and other network entities, which are not limited by the embodiments of the present disclosure.

To facilitate the understanding of the embodiments of the present disclosure, basic processes and basic concepts involved in the embodiments of the present disclosure are briefly described below. It should be understood that the basic processes and basic concepts introduced below do not limit the embodiments of the present disclosure.

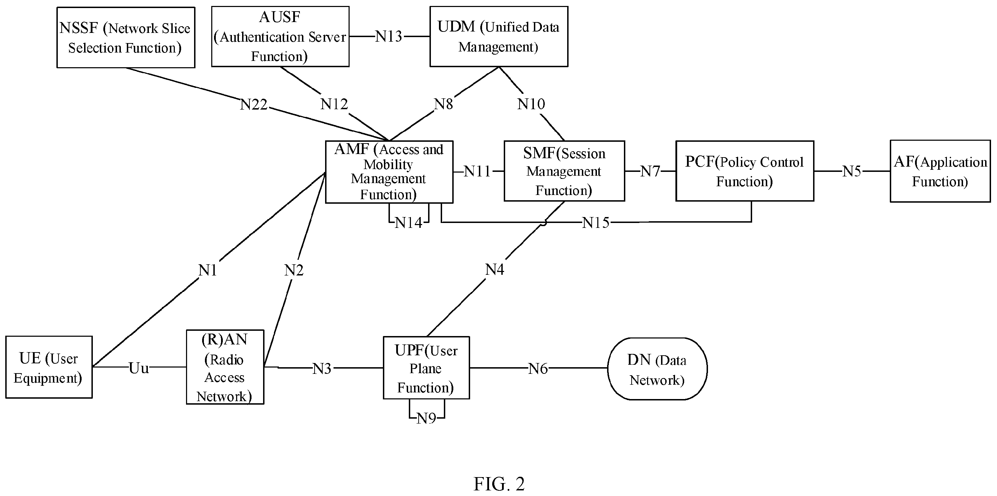

A diagram of a 5G network system architecture is shown in FIG. 2, which includes: an NSSF (Network Slice Selection Function), mainly used for management of network slice related information, such as responsible for selecting a network slice for a terminal device; an AUSF (Authentication Server Function), used for completing an identity authentication function of a user access; a UDM (Unified Data Management), used for managing and storing subscription data and authentication data; an AMF (Access and Mobility Management Function), used for completing mobility management, security anchor and security context management, etc., and in addition to the mobility management for the UE, also responsible for forwarding a session management related message between the UE and an SMF; an SMF (Session Management Function), used for completing session management, UE IP (Internet Protocol) address allocation and management, etc.; a PCF (Policy Control Function), responsible for specifying policies related to the mobility management, session management, billing for the UE, etc.; an AF (Application Function, APP Function), used for an external application server; a UPF (User Plane Function), used for the complex user plane processing, such as forwarding a traffic between a radio access network and the Internet, reporting a traffic usage, and implementing a QoS (Quality of Service) policy, etc.; and a DN (Data Network), i.e., a data network external to 5GC (e.g., the Internet).

In addition, data is transmitted between respective nodes of a 5GC (5G core network), between a user equipment (UE) and a node of the 5GC, between the UE and a radio access network (RAN), and between the RAN and a node of the 5GC, via corresponding interfaces, respectively. For example, as shown in FIG. 2, data is transmitted between the AMF and the NSSF in the 5GC via an interface N22; data is transmitted between the AMF and the SMF via an interface N11; data is transmitted between the AMF and the AUSF via an N12; and data is transmitted between the AMF and the UDM via an interface N8. Data is transmitted between the SMF and the UPF via an interface N4. Data is transmitted between the UPF and the external data network via an interface N6; and data is transmitted between the UPF and the AN via an interface N3. The UE performs an access stratum connection with the AN via an Uu port, for exchanging an access stratum message and a radio data transmission. The UE performs a non-access stratum (NAS) connection with the AMF via an N1 interface, for exchanging an NAS message. Data is transmitted between the RAN and the AMF via an interface N2, and data is transmitted between the RAN and the UPF via an interface N3. It should be understood that the above only illustrates the interfaces between some nodes, and other interfaces between other nodes of the 5GC in FIG. 2 are not repeated one by one.

The cellular network, including the 5G network, is used for communication only. However, in fact, the wireless electromagnetic wave signal used by the cellular network may not only be used for wireless data transmission and communication, but also has an ability to sense the environment, such as identifying motion or gesture of a user, monitoring breathing, measuring a movement speed of a terminal, imaging an environment, monitoring weather, etc. Therefore, it may be considered that a future cellular network is not only used for the communication and data transmission, but also used for the acquisition of sensing information. In the following, this possible scenario is referred to as integrated communication and sensing, or integrated sensing and communication.

The main wireless sensing scenarios of the aforementioned integrated communication and sensing are as follows:
1) a base station echo sensing link: where a base station transmits a sensing signal and receives an echo signal;
2) an inter-base station sensing link: where a base station B receives a sensing signal transmitted by a base station A;
3) an air interface uplink sensing link: where a base station receives a sensing signal transmitted by a terminal;
4) an air interface downlink sensing link: where a terminal receives a sensing signal transmitted by a base station;
5) a terminal echo sensing link: where a terminal transmits a sensing signal and receives an echo signal; and
6) an inter-terminal sensing link: where a terminal B receives a sensing signal transmitted by a terminal A.

In an initial stage of B5G integrated communication and sensing, it is considered to multiplex the existing air interface signal as much as possible to perform sensing behaviors, without introducing too much air interface enhancement.

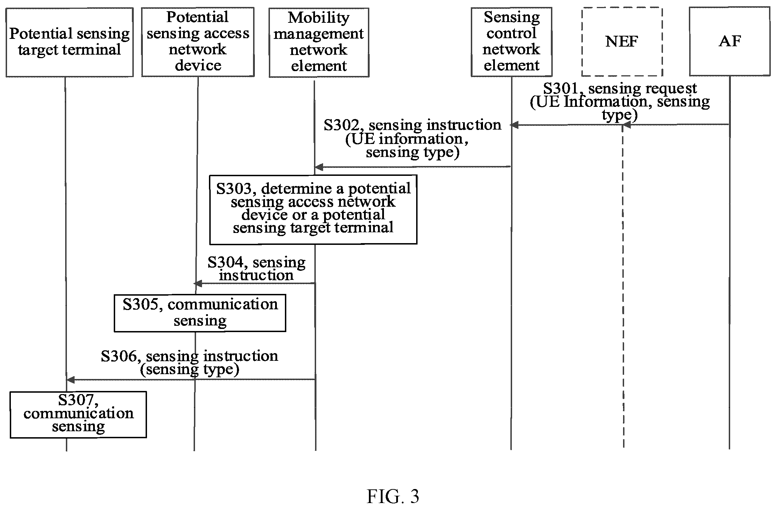

Currently, discussions are underway to support a sensing ability in the B5G network, and to support a sensing function in the 3GPP (the 3rd Generation Partnership Project) network by adding a sensing control network element (Sensing Function) and a corresponding procedure. As shown in FIG. 3, FIG. 3 is a possible flowchart of controlling an access network device or a UE to perform a UE-level sensing operation, which specifically includes S301 to S307.

S301: an AF transmits a sensing request to a sensing control network element of a core network. For example, the application function (AF) transmits the sensing request for a target UE/object to the core network of the 3GPP network; where the sensing request includes UE information and a sensing type.

S302: the sensing control network element (or AMF) transmits a sensing instruction to a mobility management network element. The sensing instruction contains the UE information and the sensing type.

S303: the mobility management network element determines a potential sensing access network device or a potential sensing target terminal.

If the mobility management network element has determined the potential sensing access network device, S304 and S305 are performed; and if the mobility management network element has determined the potential sensing target terminal, S306 and S307 are performed.

S304 to S305: the mobility management network element transmits a sensing instruction to the potential sensing access network device, and the potential sensing access network device performs a related processing of communication and sensing.

S306 to S307: the mobility management network element transmits a sensing instruction to the potential sensing target terminal, and the potential sensing target terminal performs the related processing of communication and sensing. The aforementioned sensing instruction is used to trigger an ability of a potential sensing target terminal or a potential sensing access network device to perform a sensing-related wireless measurement, and to start a measurement for sensing information and generate a sensing result.

A principle for determining to be locked by a radar: to be locked by the radar means that within a period of time, a transmission beam of the opponent's radar can get an orientation, a distance and a speed of a target correctly and track our side. Generally speaking, there is a clear difference between signals transmitted by the active radar in a searching mode and in a locking mode, such as a frequency (a low-frequency signal has a large coverage range and is used to expand a search range; and a high-frequency signal has a large spectrum range and has a high detection precision); or when a signal reception result fed back by our radio frequency link, such as power, increases sharply to a certain level, it may be determined that we have been locked by the enemy radar.

An RRC (Radio Resource Control)_Inactive state terminal or RRC_idle state terminal: in an RRC_Inactive state or RRC_idle state, the network is unaware of a position of the terminal. Therefore, when the network is about to provide a communication and sensing service for a certain terminal, other terminals traveling with the certain terminal within a period of time are also illuminated by the sensing beam (a received signal measurement result is greater than a certain threshold), and then the network may track the terminals by analyzing a result of the tracking reflection. In this case, the terminals may believe that their privacy has been violated.

It should be understood that the terms "system" and "network" herein are often used interchangeably herein. The term "and/or" herein is only an associated relationship for describing associated objects, meaning that there may be three kinds of relationships, for example, A and/or B may mean three cases where: A exists alone, both A and B exist, and B exists alone. In addition, the character "/" herein generally means that associated objects before and after "/" are in an "or" relationship.

It should be understood that the "indication" mentioned in the embodiments of the present disclosure may be a direct indication, an indirect indication, or may also represent having an associated relationship. For example, A indicates B, which may mean that A directly indicates B, for example, B may be acquired by A; may also mean that A indirectly indicates B, for example, A indicates C, and B may be acquired by C; may also mean that there is an associated relationship between A and B.

In the description of the embodiments of the present disclosure, the term "corresponding" may mean that there is a direct correspondence or indirect correspondence between two objects, may also mean that there is an associated relationship between two objects, or may also mean relationships between "indicating" and "being indicated", between "configuring" and "being configured", etc.

To facilitate the understanding of the technical solutions of the embodiments of the present disclosure, the relevant technologies of the embodiments of the present disclosure are described below. The following relevant technologies as optional solutions may be arbitrarily combined with the technical solutions of the embodiments of the present disclosure, which all belong to the protection scope of the embodiments of the present disclosure.

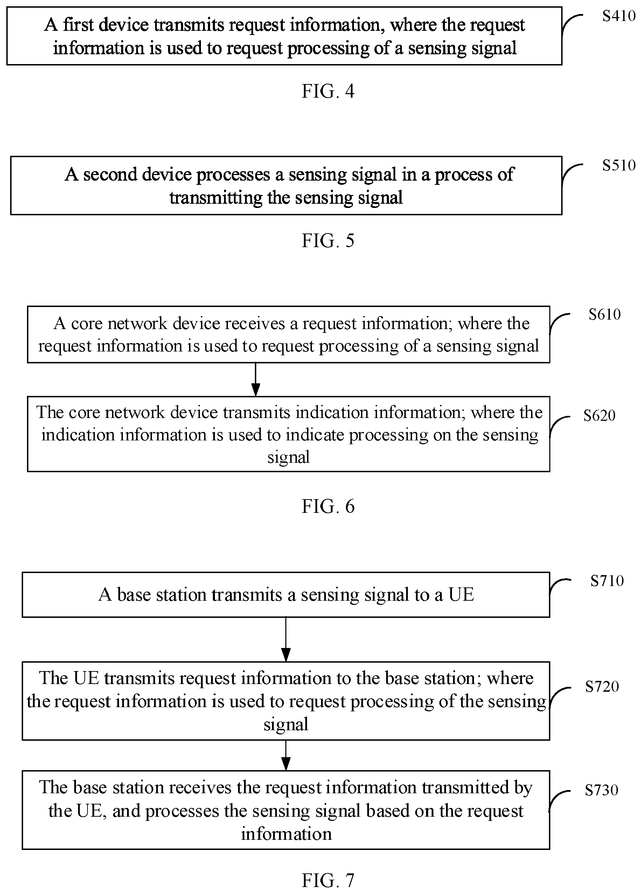

FIG. 4 is a schematic flowchart of a communication method according to an embodiment of the present disclosure. The method includes at least a part of the following contents.

S410: a first device transmits request information, where the request information is used to request processing of a sensing signal.

Here, the first device may be a terminal device.

In some possible implementations, the method may further include:
transmitting, by the first device, the request information in a case where the sensing signal meets a preset condition;
where the preset condition includes at least one of:
   a measurement result of the sensing signal being greater than a first threshold; or
   a duration of the sensing signal being greater than a second threshold.

Specifically, an operation of transmitting, by the first device, the request information in a case where the sensing signal meets the preset condition, may include:
determining, by the first device, whether the sensing signal is detected; in a case where the sensing signal is detected by the first device, determining whether the sensing signal meets the preset condition; and in a case where the sensing signal meets the preset condition, transmitting the request information.

In some embodiments, the sensing signal may be transmitted by a second device, and the second device may be a terminal device or an access network device.

Optionally, the sensing signal is transmitted on a first time-frequency resource; the first time-frequency resource is different from a second time-frequency resource, and the second time-frequency resource is used to transmit a signal other than the sensing signal. Correspondingly, the manner of determining, by the first device, whether the sensing signal is detected, may include: in a case where the first device detects a radio signal on the first time-frequency resource, determining that the sensing signal is detected.

The aforementioned fact that the first time-frequency resource is different from the second time-frequency resource, may mean that: a frequency domain range and/or a time domain range of the first time-frequency resource is different from that of the second time-frequency resource.

The signal other than the sensing signal may refer to a signal used for wireless data communication specified in the related protocol other than the sensing signal. For example, in a case where the second device is an access network device and the first device is a terminal device, the signal other than the sensing signal may be: a downlink signal for wireless data communication specified in the related protocol other than the sensing signal; and for example, in a case where the second device is a terminal device and the first device is a terminal device, the signal other than the sensing signal may be: a sidelink signal for wireless data communication specified in the related protocol other than the sensing signal.

Optionally, the sensing signal carries first information, where the first information is used to determine that a signal type is a radio signal for sensing. Correspondingly, the manner of determining, by the first device, whether the sensing signal is detected, may include: in a case where the first device receives a radio signal and the radio signal carries the first information, determining that the sensing signal is detected.

Specifically, the first information may be: a specified content occupied a specified bit in the sensing signal. The specified bit may be N bits pre-specified in the sensing signal, such as first N bits, where N is an integer greater than or equal to 1. The specified content may be pre-configured according to actual conditions. For example, if the aforementioned specified bit is a first bit of the sensing signal, the specified content refers to that a value of the first bit is a first value (the first value may be 1 or 0).

Optionally, the sensing signal carries the first information and is transmitted on the first time-frequency resource. Correspondingly, the manner of determining, by the first device, whether the sensing signal is detected, may include: in a case where the first device detects a radio signal on the first time-frequency resource, determining whether the radio signal detected on the first time-frequency resource carries the first information; and in a case where it is determined that the radio signal carries the first information, determining that the sensing signal is detected.

In some embodiments, in a case where the sensing signal is detected by the first device, an operation of determining whether the sensing signal meets the preset condition may include: after the first device determines that the sensing signal is detected, determining whether a measurement result of the sensing signal is greater than the first threshold; and in a case where the measurement result of the sensing signal is greater than the first threshold, determining that the sensing signal meets the preset condition.

Herein, the first threshold is preset, or configured by a network device. The aforementioned network device may refer to an access network device of a cell in which the first device is located, i.e., a service base station of the cell in which the first device is located.

Herein, in a case where the first threshold is configured by the network device, the first threshold is carried by one of: a system broadcast message, a first RRC signaling, first downlink control information (DCI), and a first media access control (MAC) control element (CE).

In some embodiments, in a case where the sensing signal is detected by the first device, an operation of determining whether the sensing signal meets the preset condition may include: after the first device determines that the sensing signal is detected, determining whether a duration of the sensing signal is greater than the second threshold; and in a case where the duration of the sensing signal is greater than the second threshold, determining that the sensing signal meets the preset condition.

Here, the duration of the sensing signal refers to a duration in which the sensing signal is continuously detected by the first device.

The second threshold is preset, or configured by a network device. The aforementioned network device may refer to an access network device of a cell in which the first device is located, i.e., a service base station of the cell in which the first device is located.

Herein, in a case where the second threshold is configured by the network device, the second threshold is carried by one of: a system broadcast message, a second RRC signaling, second DCI, and a second MAC CE.

The second RRC signaling may be the same as or different from the aforementioned first RRC signaling. The second MAC CE may be the same as or different from the aforementioned first MAC CE. The second DCI may be the same as or different from the aforementioned first DCI.

In some embodiments, in a case where the sensing signal is detected by the first device, an operation of determining whether the sensing signal meets the preset condition may include: after the first device determines that the sensing signal is detected, determining whether the duration of the sensing signal is greater than the second threshold, and determining whether the measurement result of the sensing signal remains greater than the first threshold within the duration; and if it is determined that the duration of the sensing signal exceeds the second threshold, and the measurement result within its duration remains greater than the first threshold, determining that the sensing signal meets the preset condition.

Optionally, the sensing signal carries a related identifier of a second device, where the second device is a device that transmits the sensing signal. The related identifier of the second device may specifically be an ID (identity identification code, Identity) of the second device. Exemplarily, the ID of the second device may be represented by any one of a temporary mobile subscriber identity (TMSI), an international mobile subscriber identity (IMSI), an I-RNTI (Inactive Radio Network Temporary Identifier), etc.

In some possible implementations, the request information is used to request stopping of transmission of the sensing signal; or, the request information is used to request a reduction in a beam width of the sensing signal.

The request information may be carried or represented by one of: a message 1 (msgl) in a 4-step random access process; a message 3 (msg3) in a 4-step random access process; a message A (msgA) in a 2-step random access process; a third MAC CE; and a third RRC signaling.

In a case where the request information is represented by the msgl in the 4-step random access process, the msgl may occupy a third time-frequency resource; and/or the request information includes a specified sequence. Herein, the third time-frequency resource is configured by a network device; and the specified sequence is different from a preamble sequence.

Optionally, the third time-frequency resource refers to: a time-frequency resource dedicated to transmitting the msgl representing the request information. The third time-frequency resource is different from a time-frequency resource used to transmit the preamble sequence specified in the related protocol.

The aforementioned network device may refer to an access network device of a cell in which the first device is located, i.e., a service base station of the cell in which the first device is located. Specifically, configuration information of the third time-frequency resource may be carried by any one of: a system broadcast message, a fifth RRC signaling, third DCI (Downlink Control Information), and a fifth MAC CE, etc.

The fifth RRC signaling is the same as or different from the aforementioned first RRC signaling, or the fifth RRC signaling is the same as or different from the aforementioned second RRC signaling. The fifth MAC CE is the same as or different from the aforementioned first MAC CE, or the fifth MAC CE is the same as or different from the aforementioned second MAC CE. The third DCI is the same as or different from the aforementioned first DCI, or the third DCI is the same as or different from the aforementioned second DCI.

Optionally, in a case where the request information is represented by the msgl, the request information includes a specified sequence, and the specified sequence is different from the preamble sequence.

Specifically, the specified sequence is different from any preamble sequence specified in the related protocol. The various preamble sequences specified in the related protocol are not repeated here. In this case, there is no limitation on the time-frequency resource occupied by the msgl.

Optionally, in a case where the request information is represented by the msgl, the request information includes a specified sequence, and the msgl occupies the third time-frequency resource.

In a case where the request information is carried by the msg3 in the 4-step random access process, the request information may be a specified cause value; and the specified cause value may be used to represent a request processing of the sensing signal. The specified cause value is different from cause values specified in the related protocol.

In a case where the request information is carried by the msgA in the 2-step random access process, the request information includes a specified sequence, or the request information may be a specified cause value. Descriptions of the specified sequence and the specified cause value are the same as those in the aforementioned embodiments and will not be repeated.

The aforementioned third MAC CE may be an uplink MAC CE; and the aforementioned third RRC signaling may be an uplink RRC signaling.

In some embodiments, the aforementioned first device may transmit the aforementioned request information via a sidelink. In this implementation, the third MAC CE is a sidelink MAC CE; or, the third RRC signaling is a sidelink RRC signaling.

In some embodiments, the aforementioned request information may also carry a related identifier of the second device. The related identifier of the second device is the same as that in the aforementioned embodiments and will not be repeated.

Specifically, in a case where the aforementioned sensing signal carries the related identifier of the second device, the request information may carry the related identifier of the second device. That is, when the first device has detected a sensing signal, it may parse from the sensing signal to obtain the related identifier of the second device; and when the first device transmits the request information, the related identifier of the second device is added to the request message to transmit. By carrying the related identifier of the second device in the request information, a receiving side device may determine to which device the indication information for processing the sensing signal needs to be transmitted.

In some possible implementations, the method further includes one of: when transmitting the request information, starting, by the first device, a timer; or when the sensing signal meets the preset condition, starting, by the first device, a timer.

That is, the first device may control the starting of the timer at the moment of transmitting the request information after determining that it is in a tracking state for the sensing signal. Alternatively, the first device may control the starting of the timer at the moment when the sensing signal meets the preset condition, and simultaneously generate and transmit the aforementioned request information. Here, when the first device determines that the sensing signal meets the preset condition, the first device may determine that it is tracked by the sensing signal, and then may control the starting of the timer, and generate and transmit the aforementioned request information.

Correspondingly, the method further includes one of the following operations. In a case where the timer does not reach a timing duration, the first device does not detect the sensing signal; or in a case where the timer does not reach a timing duration, the first device does not transmit new request information.

The timing duration is preset, or configured by a network device. The aforementioned network device may refer to an access network device of a cell in which the first device is located, i.e., a service base station of the cell in which the first device is located.

Herein, in a case where the timing duration is configured by the network device, the timing duration is carried by one of: a system broadcast message, a fourth RRC signaling, fourth DCI, and a fourth MAC CE. Here, the fourth RRC signaling may be the same as or different from the aforementioned first RRC signaling or second RRC signaling. The fourth MAC CE may be the same as or different from the aforementioned first MAC CE or second MAC CE. The fourth DCI may be the same as or different from the aforementioned first DCI or second DCI.

A length of the aforementioned timing duration may be configured according to actual conditions, for example, it may be 5 minutes, 10 minutes, or longer or shorter, which will not be exhaustively enumerated here.

In one case, in a case where the timer does not reach the timing duration, the first device does not detect the sensing signal.

That is, from the time when the first device starts the timer until the starting duration of the timer reaches the timing duration, the first device will no longer detect the sensing signal; and since the first device no longer detects the sensing signal, the first device will not transmit new request information. In this way, the first device may be prevented from frequently detecting the sensing signal and frequently reporting the request information, thereby reducing the occupancy of processing resources and reducing the occupancy of air interface resources.

In another case, in a case where the timer does not reach the timing duration, the first device does not transmit new request information.

That is, from the time when the first device starts the timer until the starting duration of the timer reaches the timing duration, the first device may remain detecting the sensing signal, but will no longer transmit new request information. In this way, the first device may be prevented from frequently reporting request information, thereby reducing the occupancy of air interface resources.

By adopting the above solutions, the first device may transmit the request information for requesting to process the sensing signal, so that the network side may perform a corresponding processing on the sensing signal, which can avoid a privacy leakage of the first device and ensure the information security of the first device.

Furthermore, in a case where the first device detects the sensing signal and determines that the sensing signal meets the preset condition, the first device may request processing of the sensing signal. In this way, related information of the first device may be avoided to be sensed by the sensing signal, thereby avoiding a privacy leakage of the first device and ensuring the information security of the first device.

FIG. 5 is a schematic flowchart of a communication method according to an embodiment of the present disclosure. The method includes at least a part of the following contents.

S510: a second device processes a sensing signal in a process of transmitting the sensing signal.

Where an operation of processing the sensing signal may include one of: stopping transmitting the sensing signal; continuing to transmit the sensing signal; or adjusting a beam width of the sensing signal. Where an operation of adjusting the beam width of the sensing signal may specifically include reducing the beam width of the sensing signal.

In some possible implementations, an operation of processing the sensing signal includes:
receiving, by the second device, request information, where the request information is used to request processing of the sensing signal; and
processing, by the second device, the sensing signal based on the request information.

An operation of receiving, by the second device, the request information may include: receiving, by the second device, the request information transmitted by the first device.

In this implementation, the second device may communicate with the first device directly. The second device may be a terminal device or an access network device.

In a case where the second device is a terminal device, the second device and the aforementioned first device may be two terminals for sidelink communication, and the second device also transmits the sensing signal to the first device at the same time.

In a case where the second device is an access network device, the access network device may be an access network device of a network in which the first device is located. In an example, the second device not only transmits the sensing signal but also serves as a serving base station for the first device.

Optionally, the request information is used to request stopping of transmission of the sensing signal. An operation of processing, by the second device, the sensing signal based on the request information, includes: stopping, by the second device, transmitting the sensing signal based on the request information. Herein, an operation of stopping transmitting the sensing signal refers to stopping transmitting the sensing signal to the first device.

Optionally, the request information is used to request a reduction in a beam width of the sensing signal; and an operation of processing, by the second device, the sensing signal based on the request information includes: reducing, by the second device, the beam width of the sensing signal, and transmitting the sensing signal with a reduced beam width, based on the request information.

Specifically, an operation of transmitting the sensing signal may include: transmitting, by the second device, the sensing signal with an initial beam width to the first device.

Where operations of reducing, by the second device, the beam width of the sensing signal, and transmitting the sensing signal with the reduced beam width, based on the request information, may include: reducing, by the second device, the beam width of the sensing signal from the initial beam width to a target beam width, and transmitting the sensing signal with a reduced beam width to the first device, based on the request information, where the target beam width is smaller than the initial beam width. The aforementioned target beam width may be determined by the second device itself, for example, the target beam width may be half, one third, etc., of the initial beam width, which is not exhaustively enumerated here, and which is within the protection scope of this embodiment as long as the target beam width is smaller than the initial beam width.

Alternatively, the request information may include a target beam width; and the target beam width is smaller than the initial beam width. Correspondingly, the operations of reducing, by the second device, the beam width of the sensing signal, and transmitting the sensing signal with the reduced beam width, based on the request information, may include: parsing, by the second device, the request information to obtain the target beam width; and reducing, by the second device, the beam width of the sensing signal from the initial beam width to the target beam width, and transmitting the sensing signal with the reduced beam width to the first device.

In some possible implementations, the operation of processing the sensing signal includes:
receiving, by the second device, indication information; where the indication information is used to indicate processing on the sensing signal; and
processing, by the second device, the sensing signal based on the indication information.

In this implementation, the second device does not directly communicate with the first device. The second device may be a terminal device or an access network device. In a case where the second device is an access network device, the access network device is not an access network device of a network in which the first device is located, that is, the access network device is not a service base station for the first device. In a case where the second device is a terminal device, the second device does not perform sidelink communication with the aforementioned first device.

More specifically, an operation of transmitting the sensing signal may include: transmitting, by the second device, the sensing signal with an initial beam width to the first device. An operation of receiving, by the second device, the indication information may be: receiving, by the second device, the indication information transmitted by a core network device.

Herein, the core network device may be a sensing control network element in a core network. It should be understood that it is only an exemplary description, and the core network device may also be other network elements of the core network, which is not exhaustively enumerated here.

The indication information may include one of: information for instructing to stop a sensing service; information for instructing to continue a sensing service; and information for instructing to reduce a beam width of the sensing signal.

In a case where the indication information is different from each other, operations performed by the second device on the sensing signal are also different from each other, which are described below respectively.

In one case, the indication information includes: information for instructing to stop a sensing service. An operation of processing, by the second device, the sensing signal based on the indication information includes: stopping, by the second device, transmitting the sensing signal based on the information for instructing to stop the sensing service. An operation of stopping transmitting the sensing signal may refer to: stopping transmitting the sensing signal to the first device.

In another case, the indication information includes: information for instructing to continue a sensing service. The operation of processing, by the second device, the sensing signal based on the indication information, includes one of:
continuing to transmit the sensing signal, by the second device, based on the information for instructing to continue the sensing service; or
reducing, by the second device, a beam width of the sensing signal, and transmitting the sensing signal with a reduced beam width, based on the information for instructing to continue the sensing service.

The aforementioned operation of continuing to transmit the sensing signal may refer to: continuing, by the second device, to transmit the sensing signal with the initial beam width to the first device.

The aforementioned operation of reducing the beam width of the sensing signal and transmitting the sensing signal with the reduced beam width, may refer to: reducing the beam width of the sensing signal from the initial beam width to the target beam width; and transmitting the sensing signal with the target beam width to the first device. Here, the target beam width is smaller than the initial beam width.

Here, the second device may determine which of the above processing to be performed based on a preset processing strategy. The preset processing strategy may be configured according to actual conditions. For example, the preset processing strategy may be: if the information for instructing to continue the sensing service is received, remaining to continue to transmit the sensing signal; or if the information for instructing to continue the sensing service is received, reducing the beam width of the sensing signal.

In yet another case, the indication information includes: information for instructing to reduce a beam width of the sensing signal. The operation of processing, by the second device, the sensing signal based on the indication information, includes: reducing, by the second device, the beam width of the sensing signal, and transmitting the sensing signal with a reduced beam width, based on the information for instructing to reduce the beam width of the sensing signal.

Operations of reducing, by the second device, the beam width of the sensing signal, and transmitting the sensing signal with the reduced beam width, based on the information for instructing to reduce the beam width of the sensing signal, may include: reducing, by the second device, the beam width of the sensing signal from the initial beam width to the target beam width, and transmitting the sensing signal with the reduced beam width to the first device, based on the information for instructing to reduce the beam width of the sensing signal. The sensing signal with the reduced beam width is a sensing signal with the target beam width. The target beam width is smaller than the initial beam width.

Alternatively, the information for instructing to reduce the beam width of the sensing signal may include a target beam width; and the target beam width is smaller than the initial beam width. Correspondingly, the operations of reducing, by the second device, the beam width of the sensing signal, and transmitting the sensing signal with the reduced beam width, based on the information for instructing to reduce the beam width of the sensing signal, may include: parsing, by the second device, the information for instructing to reduce the beam width of the sensing signal, to obtain the target beam width; and reducing, by the second device, the beam width of the sensing signal from the initial beam width to the target beam width, and transmitting the sensing signal with the reduced beam width to the first device.

In some possible implementations, the operation of processing the sensing signal includes:
receiving, by the second device, request information, where the request information is used to request processing of the sensing signal;
transmitting, by the second device, the request information;
receiving, by the second device, indication information; where the indication information is used to indicate processing on the sensing signal; and
processing, by the second device, the sensing signal based on the indication information.

In this implementation, the second device may communicate directly with the first device. The second device may be a terminal device or an access network device. In a case where the second device is an access network device, the access network device may be an access network device of a network in which the first device is located. In a case where the second device is a terminal device, the second device and the aforementioned first device may be two terminals for sidelink communication, and the second device also transmits the sensing signal to the first device at the same time.

The difference from the previous embodiments is that, in this implementation, although the second device may communicate with the first device, the second device does not make a decision, but transmits the request information out and then processes the sensing signal based on the received indication information.

Specifically, the operation of transmitting the sensing signal may include: transmitting, by the second device, the sensing signal to the first device.

An operation of transmitting, by the second device, the request information may include: transmitting, by the second device, the request information to the core network device.

An operation of receiving, by the second device, the indication information may include: receiving, by the second device, the indication information transmitted by the core network device.

Contents that may be contained in the indication information are the same as those in the aforementioned embodiments and will not be repeated. The operation of processing the sensing signal by the second device based on the indication information is also the same as that in the aforementioned embodiments and will also not be repeated here.

In an implementation, the sensing signal is transmitted on a first time-frequency resource; the first time-frequency resource is different from a second time-frequency resource, and the second time-frequency resource is used to transmit a signal other than the sensing signal. Descriptions of the first time-frequency resource and the second time-frequency resource are the same as the related descriptions in the communication method embodiments of the aforementioned first device, and are not repeated.

In an implementation, the sensing signal carries first information, and the first information is used to determine that a signal type is a radio signal for sensing. A description of the first information is the same as the related description in the communication method embodiments of the aforementioned first device, and is not repeated.

In an implementation, the sensing signal also carries a related identifier of the second device. A description of the related identifier of the second device is the same as the related description in the communication method embodiments of the aforementioned first device, and is not repeated.

In some possible implementations, the request information may be carried or represented by one of: a message 1 (msgl) in a 4-step random access process; a message 3 (msg3) in a 4-step random access process; and a message A (msgA) in a 2-step random access process.

In a case where the request information is represented by the msgl, the msgl occupies a third time-frequency resource, and/or the request information includes a specified sequence; where the third time-frequency resource is configured by a network device; and the specified sequence is different from a preamble sequence.

Here, the network device may refer to an access network device of a network in which the first device is located.

In an example, the second device may be an access network device of a network in which the first device is located. In this scenario, the network device and the second device are the same device. In another example, the second device may be a terminal device, and in this case, the second device may receive configuration information of the third time-frequency resource transmitted by the network device (i.e., an access network device of the network in which the first device is located). For example, if the second device is not within the coverage range of the aforementioned network device (i.e., an access network device of the network in which the first device is located), the second device may receive the configuration information of the third time-frequency resource from the network device, forwarded via an access network device of a network in which the second device itself is located; and if the second device is within the coverage range of the aforementioned network device, the second device may directly receive the configuration information of the third time-frequency resource transmitted by the network device. Herein, the manner of transmitting the configuration information of the third time-frequency resource has been described in the communication method embodiments of the aforementioned first device and is not repeated.

Descriptions of the third time-frequency resource and the specified sequence are the same as the related descriptions in the communication method embodiments of the aforementioned first device and are not repeated.

In a case where the request information is carried by the msg3 in the 4-step random access process, the request information may be a specified cause value; and the specified cause value may be used to represent that processing of the sensing signal is requested. The specified cause value is different from cause values specified in the related protocol.

In a case where the request information is carried by the msgA in the 2-step random access process, the request information includes a specified sequence, or the request information may be a specified cause value. Descriptions of the specified sequence and the specified cause value are the same as the related descriptions in the communication method embodiments of the aforementioned first device and are not repeated.

In some possible implementations, the request information may be carried by one of: a third MAC CE, and a third RRC signaling.

In some embodiments, the second device is a terminal device, and the second device and the aforementioned first device are two terminals for sidelink communication. In this case, the third MAC CE is a sidelink MAC CE; or, the third RRC signaling is a sidelink RRC signaling.

In some embodiments, the aforementioned request information may also carry a related identifier of the second device. Specifically, in a case where the aforementioned sensing signal carries the related identifier of the second device, the request information may carry the related identifier of the second device.

By adopting the solutions mentioned above, the second device may process the sensing signal in the process of transmitting the sensing signal, thereby avoiding a privacy leakage of the first device and ensuring the information security of the first device.

FIG. 6 is a schematic flowchart of a communication method according to an embodiment of the present disclosure. The method includes at least a part of the following contents.

S610: a core network device receives request information; where the request information is used to request processing of a sensing signal; and

S620: the core network device transmits indication information; where the indication information is used to indicate processing on the sensing signal.

Here, the core network device may be any network element of a core network. In a preferred example, the core network device may specifically be: a sensing control network element in the core network.

In some implementations, an operation that the core network device receives the request information may include: receiving, by the core network device, the request information transmitted by a network device. An operation that the core network device transmits the indication information may include: transmitting, by the core network device, the indication information to the second device.

Herein, the network device is an access network device of the network in which the first device in the aforementioned embodiments is located. Correspondingly, an operation of receiving, by the core network device, the request information transmitted by the network device specifically includes: receiving, by the core network device via the network device, the request information transmitted by the first device.

In an example, the aforementioned core network device may be a sensing control network element, and the sensing control network element may receive the request information transmitted by the first device from the network device via the mobility management network element. Herein, the mobility management network element may be an AMF in the core network, and of course, may also be other network elements in the core network, which is not exhaustively enumerated here.

The second device is a device that transmits the sensing signal. The second device is different from the access network device of the network in which the first device is located; and the second device may be a terminal device, or may be other access network device except for the access network device of the network in which the first device is located.

In some implementations, the operation that the core network device receives the request information may include: receiving, by the core network device, the request information transmitted by a second device, where the second device is a device that transmits the sensing signal. The operation that the core network device transmits the indication information may include: transmitting, by the core network device, the indication information to the second device.

Herein, the second device is an access network device of the network in which the first device is located, and transmits the sensing signal to the first device.

In some implementations, the request information is used to request stopping of transmission of the sensing signal; or, the request information is used to request a reduction in a beam width of the sensing signal.

The request information further carries a related identifier of a second device; and the second device is a device that transmits the sensing signal. The core network device may determine the second device to be controlled or indicated to process the sensing signal this time, by the related identifier of the second device carried in the request information.

The indication information includes one of:
information for instructing to stop a sensing service, where the information for instructing to stop the sensing service is used to determine to stop transmitting the sensing signal;
information for instructing to continue a sensing service, where the information for instructing to continue the sensing service is used to determine to continue to transmit the sensing signal, or to determine to reduce a beam width of the sensing signal; or
information for instructing to reduce a beam width of the sensing signal, where the information for instructing to continue the sensing service is used to determine to reduce the beam width of the sensing signal.

After the core network device receives the request information and before it transmits the indication information, the method may further include: making a decision, by the core network device, based on the request information, to generate the aforementioned indication information. The specific description is as follows.

In an example, the request information is used to request stopping of transmission of the sensing signal. Correspondingly, an operation of making the decision, by the core network device, based on the request information, to generate the aforementioned indication information, may include: directly generating, by the core network device, the information for instructing to stop the sensing service, based on the request information.

In another example, the request information is used to request stopping of transmission of the sensing signal. Correspondingly, the operation of making the decision, by the core network device, based on the request information, to generate the aforementioned indication information, may include: generating the information for instructing to continue the sensing service, if the core network device determines, based on the request information, that the second device cannot stop transmitting the sensing signal.

In this example, the core network device may determine whether the second device enables to stop the sensing service, based on the related information of the second device. For example, in a case where a level of the sensing service of the second device is high, or the sensing service is an emergency service, etc., the core network device may determine that the second device cannot stop the sensing service. It should be understood that it is only an exemplary description here, and in an actual processing, the core network device may determine whether the second device enables to stop the sensing service, based on other related information of the second device, and/or other information such as a current network status, which is just not exhaustively enumerated.

In another example, the request information is used to request stopping of transmission of the sensing signal. Correspondingly, the operation of making the decision, by the core network device, based on the request information, to generate the aforementioned indication information, may include: if the core network device determines, based on the request information, that the second device does not need to stop transmitting the sensing signal, but may reduce the beam width of the sensing signal, generating the information for instructing to reduce the beam width of the sensing signal.

In this example, the core network device may determine whether the second device enables to stop the sensing service or enables to reduce the beam width of the sensing signal, based on related information of the second device. For example, in a case where a level of the sensing service of the second device is high but not the highest, the core network device may determine that the second device cannot stop the sensing service, but enables to reduce the beam width of the sensing signal. It should be understood that it is only an exemplary description, and in an actual processing, the core network device may make a decision based on other related information of the second device and/or other information such as a current network status, which is just not exhaustively enumerated.

In yet another example, the request information is used to request a reduction in a beam width of the sensing signal. Correspondingly, the operation of making the decision, by the core network device, based on the request information, to generate the aforementioned indication information, may include: if the core network device determines, based on the request information, that the second device does not need to reduce the beam width of the sensing signal, generating the information for instructing to continue the sensing service; or, if the core network device determines, based on the request information, that the second device enables to reduce the beam width of the sensing signal, generating the information for instructing to reduce the beam width of the sensing signal.

In this example, the core network device may determine whether the second device needs to reduce the beam width of the sensing signal based on the related information of the second device. For example, in a case where a level of the sensing service of the second device is high, or the sensing service is an emergency service, etc., the core network device may determine that the second device does not need to reduce the beam width of the sensing signal; otherwise, the core network device determines that the second device enables to reduce the beam width of the sensing signal. It should be understood that it is only an exemplary description, and in an actual processing, the core network device may make a decision based on other related information of the second device and/or other information such as a current network status, which is just not exhaustively enumerated.

By adopting the solutions mentioned above, the core network device transmits the indication information after receiving the request information, and controls an operation on the sensing signal by the indication information. Therefore, the sensing signal may be processed according to the request, thereby preventing the privacy leakage of the sensed device and ensuring the information security of the sensed device.

Exemplary descriptions are made in combination with the communication methods performed by the aforementioned first device and second device. Taking an example in which the first device is a UE, the second device is a base station, and the second device serves as a serving base station of the first device, the following is described in combination with FIG. 7, and specifically may include S710 to S730.

S710: a base station transmits a sensing signal to a UE.

It should be noted that before performing S710, the base station may also receive a sensing instruction, and the sensing instruction may include contents, such as UE information, a sensing type, etc. The sensing instruction may be transmitted by a core network device, for example, the specific description of S301 to S305 mentioned above may be referred to, which will not be repeated here.

S720: the UE transmits request information to the base station; where the request information is used to request processing of the sensing signal.

The determination manner of the UE to transmit the request information and the specific description of the request information are the same as the related description of any one of the communication method of the first device and the communication method of the second device mentioned above, which is not repeated here for the sake of brevity.

S730: the base station receives the request information transmitted by the UE, and processes the sensing signal based on the request information.

Here, contents contained in the request information and a related description of processing the sensing signal based on the contents contained in the request information are the same as those in the aforementioned embodiments, which thus are not repeated.

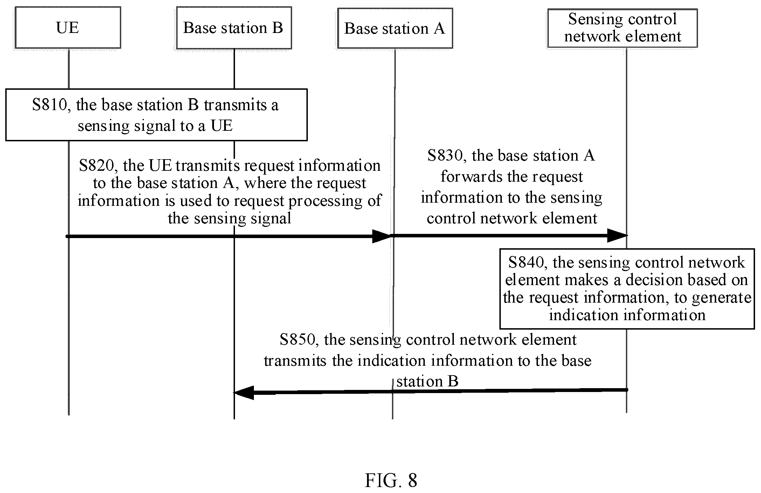

Exemplary descriptions are made in combination with the communication methods performed by the aforementioned first device, second device, and core network device. Taking an example in which the first device is a UE, the serving base station of the first device is a base station A, the second device is a base station B, and the core network device is a sensing control network element, the following is described in combination with FIG. 8, and may specifically include S810 to S850.

S810: a base station B transmits a sensing signal to a UE.

S820: the UE transmits request information to a base station A, where the request information is used to request processing of the sensing signal.

The request information is used to request stopping of transmission of the sensing signal; or, the request information is used to request a reduction in a beam width of the sensing signal.

A determination manner of the UE to transmit the request information and a specific description of the request information are the same as the related descriptions of any one of the communication method of the first device, the communication method of the second device, and the communication method of the core network device mentioned above, which are not repeated here for the sake of brevity.

S830: the base station A forwards the request information to a sensing control network element.

Specifically, the base station A may forward the request information to the sensing control network element via a mobility management network element. In FIG. 8, for the sake of brevity, the mobility management network element is not shown.

S840: the sensing control network element makes a decision based on the request information, to generate indication information.

A specific description of the sensing control network element to make a decision based on the request information is the same as the related description in the communication method of the aforementioned core network device, which is not repeated here for the sake of brevity.

S850: the sensing control network element transmits the indication information to the base station B.

The indication information includes one of: information for instructing to stop a sensing service, where the information for instructing to stop the sensing service is used to determine to stop transmitting the sensing signal; information for instructing to continue a sensing service, where the information for instructing to continue the sensing service is used to determine to continue to transmit the sensing signal, or used to determine to reduce a beam width of the sensing signal; and information for instructing to reduce a beam width of the sensing signal, where the information for instructing to continue the sensing service is used to determine to reduce a beam width of the sensing signal.

After the base station B receives the indication information, the base station B may process the sensing signal based on the indication information, and a specific processing manner is the same as the related description in the communication method embodiments of the aforementioned second device, which is not repeated here for the sake of brevity.

It should also be understood that the serving base station for the aforementioned first device (i.e., the base station A in FIG. 8) and the second device (i.e., the base station B in FIG. 8 ) may be the same base station. A related description on the second device being a service base station of the first device has been described in detail in the communication method of the aforementioned second device, which is not repeated here for the sake of brevity.

Alternatively, the second device (i.e., the base station B in FIG. 8) may also be replaced by a terminal device (a terminal device different from the first device). A related description on the second device being a terminal device has been described in detail in the communication method of the aforementioned second device, which is not repeated here for the sake of brevity.

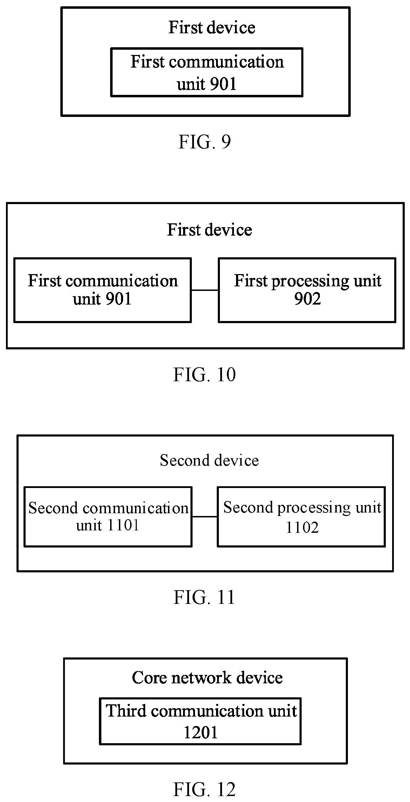

FIG. 9 is a structural schematic diagram of a first device according to an embodiment of the present disclosure, including:
a first communication unit 901, configured to transmit request information, where the request information is used to request processing of a sensing signal.

The request information is used to request stopping of transmission of the sensing signal; or, the request information is used to request a reduction in a beam width of the sensing signal.

Based on FIG. 9, as shown in FIG. 10, the first device further includes:
a first processing unit 902, configured to control the first communication unit to transmit the request information in a case where the sensing signal meets a preset condition,

The preset condition includes at least one of:
a measurement result of the sensing signal being greater than a first threshold; or
a duration of the sensing signal being greater than a second threshold.

The sensing signal is transmitted on a first time-frequency resource; the first time-frequency resource is different from a second time-frequency resource, and the second time-frequency resource is used to transmit a signal other than the sensing signal.

The sensing signal carries first information, and where the first information is used to determine that a signal type is a radio signal for sensing.

The sensing signal carries a related identifier of a second device, and the second device is a device that transmits the sensing signal.

The request information is further used to carry the related identifier of the second device.

The first threshold is preset, or configured by a network device;
where in a case where the first threshold is configured by the network device, the first threshold is carried by one of: a system broadcast message, a first radio resource control (RRC) signaling, first downlink control information (DCI), or a first media access control (MAC) control element (CE).

The second threshold is preset, or configured by a network device;
where in a case where the second threshold is configured by the network device, the second threshold is carried by one of: a system broadcast message, a second RRC signaling, second DCI, or a second MAC CE.

The first processing unit is configured to perform one of:
when the first communication unit transmits the request information, starting a timer; or
when the sensing signal meets the preset condition, starting a timer.

The first processing unit is configured to perform one of:
in a case where the timer does not reach a timing duration, skipping detection the sensing signal; or
in a case where the timer does not reach a timing duration, controlling to not transmit new request information.

The timing duration is preset, or configured by a network device; where in a case where the timing duration is configured by the network device, the timing duration is carried by one of: a system broadcast message, a fourth RRC signaling, fourth DCI, or a fourth MAC CE.

The request information is carried or represented by one of: a message 1 (msgl) in a 4-step random access process; a message 3 (msg3) in a 4-step random access process; a message A (msgA) in a 2-step random access process; a third MAC CE; and a third RRC signaling.

In a case where the request information is represented by the msgl, the msgl occupies a third time-frequency resource, and/or the request information includes a specified sequence;
where the third time-frequency resource is configured by a network device; and the specified sequence is different from a preamble sequence.

The third MAC CE is a sidelink MAC CE; or the third RRC signaling is a sidelink RRC signaling.

The first device in the embodiments of the present disclosure may implement the corresponding functions of the first device in the aforementioned method embodiments. The procedures, functions, implementations and beneficial effects corresponding to respective modules (sub-modules, units or components, etc.) in the first device may be referred to the corresponding descriptions in the method embodiments mentioned above, which is not repeated here. It should be noted that the functions described with respect to the respective modules (sub-modules, units or components, etc.) in the first device of the embodiments of the present disclosure may be implemented by different modules (sub-modules, units or components, etc.), or by a same module (sub-module, unit or component, etc.).

FIG. 11 is a structural schematic diagram of a second device according to an embodiment of the present disclosure, including:
a second communication unit 1101, configured to transmit a sensing signal; and
a second processing unit 1102, configured to process the sensing signal in a process of the second communication unit transmitting the sensing signal.

The second communication unit is configured to receive request information, and the request information is used to request processing of the sensing signal; and
the second processing unit is configured to process the sensing signal based on the request information.

The request information is used to request stopping of transmission of the sensing signal; and the second processing unit is configured to control the second communication unit to stop transmitting the sensing signal based on the request information.

The request information is used to request a reduction in a beam width of the sensing signal; and the second processing unit is configured to reduce the beam width of the sensing signal, and control the second communication unit to transmit the sensing signal with a reduced beam width, based on the request information.

The second communication unit is configured to receive indication information; and the indication information is used to indicate processing on the sensing signal; and the second processing unit is configured to process the sensing signal based on the indication information.

The second communication unit is configured to receive request information, the request information being used to request processing of the sensing signal; transmit the request information; and receive indication information, where the indication information is used to indicate processing on the sensing signal; and
the second processing unit is configured to process the sensing signal based on the indication information.

The indication information includes: information for instructing to stop a sensing service; and the second processing unit is configured to control the second communication unit to stop transmitting the sensing signal based on the information for instructing to stop the sensing service.

The indication information includes: information for instructing to continue a sensing service; and
the second processing unit is configured to perform one of:
controlling the second communication unit to continue to transmit the sensing signal, based on the information for instructing to continue the sensing service; or
reducing a beam width of the sensing signal, and controlling the second communication unit to transmit the sensing signal with a reduced beam width, based on the information for instructing to continue the sensing service.

The indication information includes: information for instructing to reduce a beam width of the sensing signal; and the second processing unit is configured to reduce the beam width of the sensing signal, and control the second communication unit to transmit the sensing signal with a reduced beam width, based on the information for instructing to reduce the beam width of the sensing signal.

The sensing signal is transmitted on a first time-frequency resource; the first time-frequency resource is different from a second time-frequency resource, and the second time-frequency resource is used to transmit a signal other than the sensing signal.

The sensing signal carries first information, and the first information is used to determine that a signal type is a radio signal for sensing.

The sensing signal further carries a related identifier of the second device.

The request information is carried or represented by one of: a message 1 (msgl) in a 4-step random access process; a message 3 (msg3) in a 4-step random access process; and a message A (msgA) in a 2-step random access process.

In a case where the request information is represented by the msgl, the msgl occupies a third time-frequency resource, and/or the request information includes a specified sequence; where the third time-frequency resource is configured by a network device; and the specified sequence is different from a preamble sequence.

The request information is carried by one of: a third MAC CE, and a third RRC signaling.

The third MAC CE is a sidelink MAC CE; or the third RRC signaling is a sidelink RRC signaling.

The second device is an access network device.

The second device is a terminal device.

The second device in the embodiments of the present disclosure may implement the corresponding functions of the second device in the aforementioned method embodiments. The procedures, functions, implementations and beneficial effects corresponding to respective modules (sub-modules, units or components, etc.) in the second device may be referred to the corresponding descriptions in the method embodiments mentioned above, which is not repeated here. It should be noted that the functions described with respect to the respective modules (sub-modules, units or components, etc.) in the second device of the embodiments of the present disclosure may be implemented by different modules (sub-modules, units or components, etc.), or by a same module (sub-module, unit or component, etc.).

FIG. 12 is a structural schematic diagram of a core network device according to an embodiment of the present disclosure, including:
a third communication unit 1201, configured to receive request information, the request information being used to request processing of a sensing signal; and transmit indication information, the indication information being used to indicate processing on the sensing signal.

The request information is used to request stopping of transmission of the sensing signal; or, the request information is used to request a reduction in a beam width of the sensing signal.

The request information further carries a related identifier of a second device; and the second device is a device that transmits the sensing signal.

The indication information includes one of:
information for instructing to stop a sensing service, where the information for instructing to stop the sensing service is used to determine to stop transmitting the sensing signal;
information for instructing to continue a sensing service, where the information for instructing to continue the sensing service is used to determine to continue to transmit the sensing signal, or to determine to reduce a beam width of the sensing signal; or
information for instructing to reduce a beam width of the sensing signal, where the information for instructing to continue the sensing service is used to determine to reduce the beam width of the sensing signal.

The core network device in the embodiments of the present disclosure may implement the corresponding functions of the core network device in the aforementioned method embodiments. The procedures, functions, implementations and beneficial effects corresponding to respective modules (sub-modules, units or components, etc.) in the core network device may be referred to the corresponding descriptions in the method embodiments mentioned above, which is not repeated here. It should be noted that the core network device may further include a third processing unit that may perform the aforementioned processing such as making a decision based on the request information, which is just not shown in FIG. 12. The functions described with respect to the respective modules (sub-modules, units or components, etc.) in the core network device of the embodiments of the present disclosure may be implemented by different modules (sub-modules, units or components, etc.), or by a same module (sub-module, unit or component, etc.).

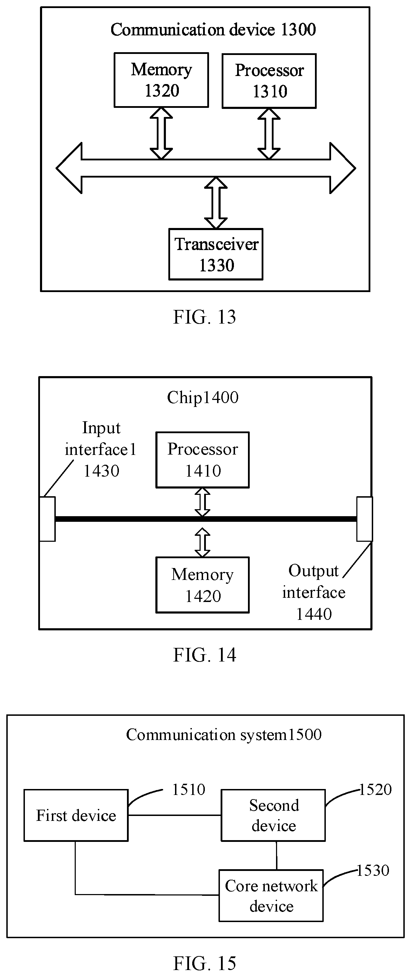

FIG. 13 is a schematic structural diagram of a communication device 1300 according to the embodiments of the present disclosure. The communication device 1300 includes a processor 1310, and the processor 1310 may invoke a computer program from a memory and execute the computer program, to cause the communication device 1300 to implement the methods in the embodiments of the present disclosure.

In a possible implementation, the communication device 1300 may further include a memory 1320. Herein, the processor 1310 may invoke a computer program from the memory 1320 and execute the computer program, to cause the communication device 1300 to implement the methods in the embodiments of the present disclosure.

Herein, the memory 1320 may be a separate device independent of the processor 1310, or may be integrated into the processor 1310.

In a possible implementation, the communication device 1300 may further include a transceiver 1330, and the processor 1310 may control the transceiver 1330 to communicate with other devices, and specifically, control the transceiver 1330 to be capable of transmitting information or data to other devices, or receive information or data transmitted by other devices.

Herein, the transceiver 1330 may include a transmitter and a receiver. The transceiver 1330 may further include an antenna, and a number of antennas may be one or more.

In a possible implementation, the communication device 1300 may be the first device in the embodiments of the present disclosure, and the communication device 1300 may implement the corresponding procedures implemented by the first device in respective methods of the embodiments of the present disclosure, which will not be repeated here for the sake of brevity.

In a possible implementation, the communication device 1300 may be the second device in the embodiments of the present disclosure, and the communication device 1300 may implement the corresponding procedures implemented by the first device in respective methods of the embodiments of the present disclosure, which will not be repeated here for the sake of brevity.

In a possible implementation, the communication device 1300 may be the core network device in the embodiments of the present disclosure, and the communication device 1300 may implement the corresponding procedures implemented by the core network device in respective methods of the embodiments of the present disclosure, which will not be repeated here for the sake of brevity.

FIG. 14 is a schematic structural diagram of a chip 1400 according to the embodiments of the present disclosure. The chip 1400 includes a processor 1410, and the processor 1410 may invoke and execute a computer program from a memory to implement the method in the embodiments of the present disclosure.

In a possible implementation, the chip 1400 may further include a memory 1420. Herein, the processor 1410 may invoke the computer program from the memory 1420 and execute the computer program to implement the method performed by the first device or the second device or the core network device in the embodiments of the present disclosure.

Herein, the memory 1420 may be a separate device independent from the processor 1410, or may also be integrated into the processor 1410.

In a possible implementation, the chip 1400 may further include an input interface 1430. Herein, the processor 1410 may control the input interface 1430 to communicate with other devices or chips, and specifically, to be capable of acquiring information or data transmitted by other devices or chips.

In a possible implementation, the chip 1400 may further include an output interface 1440. Herein, the processor 1410 may control the output interface 1440 to communicate with other devices or chips, and specifically, to be capable of outputting information or data to other devices or chips.

In a possible implementation, the chip may be applied to the first device in the embodiments of the present disclosure, and the chip may implement the corresponding procedures implemented by the first device in the respective methods of the embodiments of the present disclosure, which will not be repeated here for the sake of brevity.

In a possible implementation, the chip may be applied to the second device in the embodiments of the present disclosure, and the chip may implement the corresponding procedures implemented by the second device in the respective methods of the embodiments of the present disclosure, which will not be repeated here for the sake of brevity.

In a possible implementation, the chip may be applied to the core network device in the embodiments of the present disclosure, and the chip may implement the corresponding procedures implemented by the core network device in the respective methods of the embodiments of the present disclosure, which will not be repeated here for the sake of brevity.

The chips applied to the core network device, the first device, and the second device may be the same chips or different chips.

It should be understood that the chip mentioned in the embodiments of the present disclosure may also be referred to as a system on chip, a system chip, a chip system or a system-on-chip chip, etc.

The processor mentioned above may be a general-purpose processor, a digital signal processor (DSP), a field programmable gate array (FPGA), an application specific integrated circuit (ASIC) or other programmable logic devices, a transistor logic device, a discrete hardware component, etc. Herein, the general-purpose processor mentioned above may be a microprocessor or may also be any conventional processor.

The memory mentioned above may be a volatile memory or a non-volatile memory, or may include both volatile and non-volatile memories. Herein, the non-volatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM) or a flash memory. The volatile memory may be a random access memory (RAM).

It should be understood that the above memory is exemplary but not limiting illustration, e.g., the memory in embodiments of the present disclosure may also be a static Random Access Memory (static RAM, SRAM), a Dynamic Random Access Memory (dynamic RAM, DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM), etc. That is, the memory in the embodiments of the present disclosure is intended to include, but not limited to, these and any other suitable types of memories.

FIG. 15 is a schematic block diagram of a communication system 1500 according to the embodiments of the present disclosure. The communication system 1500 includes a first device 1510, a second device 1520, and a core network device 1530.

Herein, the first device 1510 may be used to implement the corresponding functions implemented by the first device in the methods mentioned above, the second device 1520 may be used to implement the corresponding functions implemented by the second device in the methods mentioned above, and the core network device 1530 may be used to implement the corresponding functions implemented by the core network device in the methods mentioned above, which are not repeated here for the sake of brevity.

The above embodiments may be implemented in whole or in part by software, hardware, firmware, or any combination thereof. When the above embodiments are implemented by using software, they may be implemented in the form of a computer program product in whole or in part. The computer program product includes one or more computer instructions. When computer program instructions are loaded and executed on a computer, processes or functions according to the embodiments of the present disclosure are generated in whole or in part. The computer may be a general-purpose computer, a dedicated computer, a computer network, or any other programmable apparatus. The computer instructions may be stored in a computer-readable storage medium or transmitted from one computer-readable storage medium to another computer-readable storage medium, for example, the computer instructions may be transmitted from a website site, computer, server, or data center to another website site, computer, server, or data center via wired (such as coaxial cable, fiber optic, digital subscriber line (DSL)) or wireless (such as infrared, radio, microwave, etc.) means. The computer-readable storage medium may be any available medium that can be accessed by the computer, or a data storage device, such as including a server or a data center that integrates one or more available mediums. The available medium may be a magnetic medium (e.g., a floppy disk, a hard disk or a magnetic tape), an optical medium (e.g., a digital video disk (DVD)) or a semiconductor medium (e.g., a solid state disk (SSD)), etc.

It should be understood that, in the various embodiments of the present disclosure, a size of serial numbers of the above processes does not imply an order of execution, and the execution order of the respective processes should be determined by their function and internal logic, but should not constitute any limitation on the implementation processes of the embodiments of the present disclosure.

Those skilled in the art may clearly understand that, for the convenience and brevity of the description, the specific working processes of the systems, apparatus and units described above may refer to the corresponding processes in the above method embodiments, which will not be repeated here.

The above description is only the specific implementation of the present disclosure, but the protection scope of the present disclosure is not limited thereto, and any skilled familiar with this technical field may easily think of changes or substitutions within the technical scope disclosed in the present disclosure, which should be all covered within the protection scope of the present disclosure. Therefore, the protection scope of the present disclosure should be subject to the protection scope of claims.

## Claims

1. A communication method, comprising:
transmitting, by a first device, request information, wherein the request information is used to request processing of a sensing signal.

2. The method according to claim 1, wherein
the request information is used to request stopping of transmission of the sensing signal; or
the request information is used to request a reduction in a beam width of the sensing signal.

3. The method according to claim 1 or 2, further comprising:
transmitting, by the first device, the request information in a case where the sensing signal meets a preset condition;
wherein the preset condition comprises at least one of:
a measurement result of the sensing signal being greater than a first threshold; or
a duration of the sensing signal being greater than a second threshold.

4. The method according to claim 3, wherein the sensing signal is transmitted on a first time-frequency resource; the first time-frequency resource is different from a second time-frequency resource, and the second time-frequency resource is used to transmit a signal other than the sensing signal.

5. The method according to claim 3 or 4, wherein the sensing signal carries first information, and the first information is used to determine that a signal type is a radio signal for sensing.

6. The method according to any one of claims 3 to 5, wherein the sensing signal carries a related identifier of a second device, and the second device is a device that transmits the sensing signal.

7. The method according to claim 6, wherein the request information is further used to carry the related identifier of the second device.

8. The method according to claim 3, wherein the first threshold is preset, or configured by a network device; and
wherein in a case where the first threshold is configured by the network device, the first threshold is carried by one of: a system broadcast message, a first radio resource control (RRC) signaling, first downlink control information (DCI), or a first media access control (MAC) control element (CE).

9. The method according to claim 3, wherein the second threshold is preset, or configured by a network device; and
wherein in a case where the second threshold is configured by the network device, the second threshold is carried by one of: a system broadcast message, a second RRC signaling, second DCI, or a second MAC CE.

10. The method according to any one of claims 3 to 7, wherein the method further comprises one of:
starting, by the first device, a timer when transmitting the request information; or
starting, by the first device, a timer when the sensing signal meets the preset condition.

11. The method according to claim 10, wherein the method further comprises one of:
skipping, by the first device, detection of the sensing signal in a case where the timer does not reach a timing duration; or
skipping, by the first device, transmission of new request information in a case where the timer does not reach a timing duration.

12. The method according to claim 11, wherein the timing duration is preset, or configured by a network device; and
wherein in a case where the timing duration is configured by the network device, the timing duration is carried by one of: a system broadcast message, a fourth RRC signaling, fourth DCI, or a fourth MAC CE.

13. The method according to any one of claims 1 to 12, wherein the request information is carried or represented by one of: a message 1 (msgl) in a 4-step random access process; a message 3 (msg3) in a 4-step random access process; a message A (msgA) in a 2-step random access process; a third MAC CE; and a third RRC signaling.

14. The method according to claim 13, wherein in a case where the request information is represented by the msgl, the msgl occupies a third time-frequency resource, and/or the request information comprises a specified sequence; and
wherein the third time-frequency resource is configured by a network device; and the specified sequence is different from a preamble sequence.

15. The method according to claim 13, wherein the third MAC CE is a sidelink MAC CE; or the third RRC signaling is a sidelink RRC signaling.

16. A communication method, comprising:
processing, by a second device, a sensing signal in a process of transmitting the sensing signal.

17. The method according to claim 16, wherein processing the sensing signal comprises:
receiving, by the second device, request information, wherein the request information is used to request processing of the sensing signal; and
processing, by the second device, the sensing signal based on the request information.

18. The method according to claim 17, wherein the request information is used to request stopping of transmission of the sensing signal; and
processing, by the second device, the sensing signal based on the request information comprises:
stopping, by the second device, transmitting the sensing signal based on the request information.

19. The method according to claim 17, wherein the request information is used to request a reduction in a beam width of the sensing signal; and
processing, by the second device, the sensing signal based on the request information, comprises:
reducing, by the second device, the beam width of the sensing signal, and transmitting a sensing signal with a reduced beam width, based on the request information.

20. The method according to claim 16, wherein processing the sensing signal comprises:
receiving, by the second device, indication information; wherein the indication information is used to indicate processing on the sensing signal; and
processing, by the second device, the sensing signal based on the indication information.

21. The method according to claim 16, wherein processing the sensing signal comprises:
receiving, by the second device, request information, wherein the request information is used to request processing of the sensing signal;
transmitting, by the second device, the request information;
receiving, by the second device, indication information; wherein the indication information is used to indicate processing on the sensing signal; and
processing, by the second device, the sensing signal based on the indication information.

22. The method according to claim 20 or 21, wherein the indication information comprises: information for instructing to stop a sensing service; and
processing, by the second device, the sensing signal based on the indication information comprises: stopping, by the second device, transmitting the sensing signal based on the information for instructing to stop the sensing service.

23. The method according to claim 20 or 21, wherein the indication information comprises: information for instructing to continue a sensing service; and
processing, by the second device, the sensing signal based on the indication information comprises one of:
continuing to transmit the sensing signal, by the second device, based on the information for instructing to continue the sensing service; or
reducing, by the second device, a beam width of the sensing signal, and transmitting a sensing signal with a reduced beam width, based on the information for instructing to continue the sensing service.

24. The method according to claim 20 or 21, wherein the indication information comprises: information for instructing to reduce a beam width of the sensing signal; and
processing, by the second device, the sensing signal based on the indication information comprises: reducing, by the second device, the beam width of the sensing signal, and transmitting a sensing signal with a reduced beam width, based on the information for instructing to reduce the beam width of the sensing signal.

25. The method according to any one of claims 16 to 24, wherein the sensing signal is transmitted on a first time-frequency resource; the first time-frequency resource is different from a second time-frequency resource, and the second time-frequency resource is used to transmit a signal other than the sensing signal.

26. The method according to any one of claims 16 to 25, wherein the sensing signal carries first information, and the first information is used to determine that a signal type is a radio signal for sensing.

27. The method according to any one of claims 16 to 26, wherein the sensing signal further carries a related identifier of the second device.

28. The method according to any one of claims 17 to 19 or 21, wherein the request information is carried or represented by one of: a message 1 (msgl) in a 4-step random access process; a message 3 (msg3) in a 4-step random access process; and a message A (msgA) in a 2-step random access process.

29. The method according to claim 28, wherein in a case where the request information is represented by the msgl, the msgl occupies a third time-frequency resource, and/or the request information comprises a specified sequence; and
wherein the third time-frequency resource is configured by a network device; and the specified sequence is different from a preamble sequence.

30. The method according to any one of claims 17 to 19 or 21, wherein the request information is carried by one of: a third MAC CE, and a third RRC signaling.

31. The method according to claim 30, wherein the third MAC CE is a sidelink MAC CE; or the third RRC signaling is a sidelink RRC signaling.

32. The method according to any one of claims 16 to 30, wherein the second device is an access network device.

33. The method according to any one of claims 16 to 27 or 31, wherein the second device is a terminal device.

34. A communication method, comprising:
receiving, by a core network device, request information; wherein the request information is used to request processing of a sensing signal; and
transmitting, by the core network device, indication information; wherein the indication information is used to indicate processing on the sensing signal.

35. The method according to claim 34, wherein the request information is used to request stopping of transmission of the sensing signal; or the request information is used to request a reduction in a beam width of the sensing signal.

36. The method according to claim 35, wherein the request information further carries a related identifier of a second device; and the second device is a device that transmits the sensing signal.

37. The method according to any one of claims 34 to 36, wherein the indication information comprises one of:
information for instructing to stop a sensing service, wherein the information for instructing to stop the sensing service is used to determine to stop transmitting the sensing signal;
information for instructing to continue a sensing service, wherein the information for instructing to continue the sensing service is used to determine to continue to transmit the sensing signal, or to determine to reduce a beam width of the sensing signal; or
information for instructing to reduce a beam width of the sensing signal, wherein the information for instructing to continue the sensing service is used to determine to reduce the beam width of the sensing signal.

38. A first device, comprising:
a first communication unit, configured to transmit request information; wherein the request information is used to request processing of a sensing signal.

39. The first device according to claim 38, wherein the request information is used to request stopping of transmission of the sensing signal; or, the request information is used to request a reduction in a beam width of the sensing signal.

40. The first device according to claim 38 or 39, wherein the first device further comprises:
a first processing unit, configured to control the first communication unit to transmit the request information in a case where the sensing signal meets a preset condition;
wherein the preset condition comprises at least one of:
a measurement result of the sensing signal being greater than a first threshold; or
a duration of the sensing signal being greater than a second threshold.

41. The first device according to claim 40, wherein the sensing signal is transmitted on a first time-frequency resource; the first time-frequency resource is different from a second time-frequency resource, and the second time-frequency resource is used to transmit a signal other than the sensing signal.

42. The first device according to claim 40 or 41, wherein the sensing signal carries first information, and the first information is used to determine that a signal type is a radio signal for sensing.

43. The first device according to any one of claims 40 to 42, wherein the sensing signal carries a related identifier of a second device, and the second device is a device that transmits the sensing signal.

44. The first device according to claim 43, wherein the request information is further used to carry the related identifier of the second device.

45. The first device according to claim 40, wherein the first threshold is preset, or configured by a network device;
wherein in a case where the first threshold is configured by the network device, the first threshold is carried by one of: a system broadcast message, a first radio resource control (RRC) signaling, first downlink control information (DCI), or a first media access control (MAC) control element (CE).

46. The first device according to claim 40, wherein the second threshold is preset, or configured by a network device; and
wherein in a case where the second threshold is configured by the network device, the second threshold is carried by one of: a system broadcast message, a second RRC signaling, second DCI, or a second MAC CE.

47. The first device according to any one of claims 40 to 44, wherein the first processing unit is configured to perform one of:
starting a timer when the first communication unit transmits the request information; or
starting a timer when the sensing signal meets the preset condition.

48. The first device according to claim 47, wherein the first processing unit is configured to perform one of:
skipping detection of the sensing signal in a case where the timer does not reach a timing duration; or
controlling to not transmit new request information in a case where the timer does not reach a timing duration.

49. The first device according to claim 48, wherein the timing duration is preset, or configured by a network device; and
wherein in a case where the timing duration is configured by the network device, the timing duration is carried by one of: a system broadcast message, a fourth RRC signaling, fourth DCI, or a fourth MAC CE.

50. The first device according to any one of claims 38 to 49, wherein the request information is carried or represented by one of: a message 1 (msgl) in a 4-step random access process; a message 3 (msg3) in a 4-step random access process; a message A (msgA) in a 2-step random access process; a third MAC CE; and a third RRC signaling.

51. The first device according to claim 50, wherein in a case where the request information is represented by the msgl, the msgl occupies a third time-frequency resource, and/or the request information comprises a specified sequence; and
wherein the third time-frequency resource is configured by a network device; and the specified sequence is different from a preamble sequence.

52. The first device according to claim 50, wherein the third MAC CE is a sidelink MAC CE; or the third RRC signaling is a sidelink RRC signaling.

53. A second device, comprising:
a second communication unit, configured to transmit a sensing signal; and
a second processing unit, configured to process the sensing signal in a process of the second communication unit transmitting the sensing signal.

54. The second device according to claim 53, wherein
the second communication unit is configured to receive request information, and the request information is used to request processing of the sensing signal; and
the second processing unit is configured to process the sensing signal based on the request information.

55. The second device according to claim 54, wherein the request information is used to request stopping of transmission of the sensing signal; and
the second processing unit is configured to control the second communication unit to stop transmitting the sensing signal based on the request information.

56. The second device according to claim 54, wherein the request information is used to request a reduction in a beam width of the sensing signal; and
the second processing unit is configured to reduce the beam width of the sensing signal, and control the second communication unit to transmit a sensing signal with a reduced beam width, based on the request information.

57. The second device according to claim 53, wherein
the second communication unit is configured to receive indication information; and the indication information is used to indicate processing on the sensing signal; and
the second processing unit is configured to process the sensing signal based on the indication information.

58. The second device according to claim 53, wherein
the second communication unit is configured to receive request information, wherein the request information is used to request processing of the sensing signal; transmit the request information; and receive indication information, wherein the indication information is used to indicate processing on the sensing signal; and
the second processing unit is configured to process the sensing signal based on the indication information.

59. The second device according to claim 57 or 58, wherein the indication information comprises: information for instructing to stop a sensing service; and
the second processing unit is configured to control the second communication unit to stop transmitting the sensing signal based on the information for instructing to stop the sensing service.

60. The second device according to claim 57 or 58, wherein the indication information comprises: information for instructing to continue a sensing service; and
the second processing unit is configured to perform one of:
controlling the second communication unit to continue to transmit the sensing signal, based on the information for instructing to continue the sensing service; or
reducing a beam width of the sensing signal, and controlling the second communication unit to transmit a sensing signal with a reduced beam width, based on the information for instructing to continue the sensing service.

61. The second device according to claim 57 or 58, wherein the indication information comprises: information for instructing to reduce a beam width of the sensing signal; and
the second processing unit is configured to reduce the beam width of the sensing signal, and control the second communication unit to transmit a sensing signal with a reduced beam width, based on the information for instructing to reduce the beam width of the sensing signal.

62. The second device according to any one of claims 53 to 61, wherein the sensing signal is transmitted on a first time-frequency resource; the first time-frequency resource is different from a second time-frequency resource, and the second time-frequency resource is used to transmit a signal other than the sensing signal.

63. The second device according to any one of claims 53 to 62, wherein the sensing signal carries first information, and the first information is used to determine that a signal type is a radio signal for sensing.

64. The second device according to any one of claims 53 to 63, wherein the sensing signal further carries a related identifier of the second device.

65. The second device according to any one of claims 54 to 56 or 58, wherein the request information is carried or represented by one of: a message 1 (msgl) in a 4-step random access process; a message 3 (msg3) in a 4-step random access process; and a message A (msgA) in a 2-step random access process.

66. The second device according to claim 65, wherein in a case where the request information is represented by the msgl, the msgl occupies a third time-frequency resource, and/or the request information comprises a specified sequence; and
wherein the third time-frequency resource is configured by a network device; and the specified sequence is different from a preamble sequence.

67. The second device according to any one of claims 54 to 56 or 58, wherein the request information is carried by one of: a third MAC CE, and a third RRC signaling.

68. The second device according to claim 67, wherein the third MAC CE is a sidelink MAC CE; or the third RRC signaling is a sidelink RRC signaling.

69. The second device according to any one of claims 53 to 67, wherein the second device is an access network device.

70. The second device according to any one of claims 53 to 64 or 68, wherein the second device is a terminal device.

71. A core network device, comprising:
a third communication unit, configured to receive request information, the request information being used to request processing of a sensing signal; and transmit indication information, the indication information being used to indicate processing on the sensing signal.

72. The core network device according to claim 71, wherein the request information is used to request stopping of transmission of the sensing signal; or the request information is used to request a reduction in a beam width of the sensing signal.

73. The core network device according to claim 72, wherein the request information further carries a related identifier of a second device; and the second device is a device that transmits the sensing signal.

74. The core network device according to any one of claims 71 to 73, wherein the indication information comprises one of:
information for instructing to stop a sensing service, wherein the information for instructing to stop the sensing service is used to determine to stop transmitting the sensing signal;
information for instructing to continue a sensing service, wherein the information for instructing to continue the sensing service is used to determine to continue to transmit the sensing signal, or to determine to reduce a beam width of the sensing signal; or
information for instructing to reduce a beam width of the sensing signal, wherein the information for instructing to continue the sensing service is used to determine to reduce the beam width of the sensing signal.

75. A first device, comprising: a processor and a memory, wherein the memory is configured to store a computer program, and the processor is configured to invoke and execute the computer program stored in the memory, to cause the first device to perform the method according to any one of claims 1 to 15.

76. A second device, comprising: a processor and a memory, wherein the memory is configured to store a computer program, and the processor is configured to invoke and execute the computer program stored in the memory, to cause the second device to perform the method according to any one of claims 16 to 33.

77. A core network device, comprising: a processor and a memory, wherein the memory is configured to store a computer program, and the processor is configured to invoke and execute the computer program stored in the memory, to cause the core network device to perform the method according to any one of claims 34 to 37.

78. A chip, comprising: a processor, configured to invoke a computer program from a memory and execute the computer program, to cause a device equipped with the chip to perform the method according to any one of claims 1 to 15.

79. A chip, comprising: a processor, configured to invoke a computer program from a memory and execute the computer program, to cause a device equipped with the chip to perform the method according to any one of claims 16 to 33.

80. A chip, comprising: a processor, configured to invoke a computer program from a memory and execute the computer program, to cause a device equipped with the chip to perform the method according to any one of claims 34 to 37.

81. A computer-readable storage medium for storing a computer program, wherein the computer program, when executed by a device, causes the device to perform the method according to any one of claims 1 to 15, or claims 16 to 33, or claims 34 to 37.

82. A computer program product, comprising computer program instructions, wherein the computer program instructions cause a computer to perform the method according to any one of claims 1 to 15, or claims 16 to 33, or claims 34 to 37.

83. A computer program, wherein the computer program causes a computer to perform the method according to any one of claims 1 to 15, or claims 16 to 33, or claims 34 to 37.
